# EUROPEAN PATENT SPECIFICATION

(11) **EP 3 931 554 B1**
(45) Date of publication and mention of the grant of the patent: **29.04.2026**
(21) Application number: 20706307.4
(22) Date of filing: 27.02.2020
(51) Int. Cl.: G01N 21/954, B08B 9/08, F22B 37/00, F27D 21/00, G01F 23/292, G02B 23/24, G03B 37/00

(54) **INSPECTION CAMERA**
INSPEKTIONSKAMERA
CAMÉRA D'INSPECTION

(30) Priority: 27.02.2019 EP 19159605
(43) Date of publication of application: 05.01.2022
(73) Proprietor: Alfa Laval Corporate AB, 221 00 Lund (SE)
(72) Inventor: HJELLESTAD, Ulv Ketil, 5212 SOFTELAND (NO); ROSVOLD, Hallvard, 5200 OS (NO)
(74) Representative: Alfa Laval Attorneys
(86) International application number: PCT/EP2020/055135
(87) International publication number: WO 2020/174042

(56) References cited:
- WO-A1-2013/038550
- US-A- 5 565 981
- US-A1- 2004 006 448

## Description

### TECHNICAL FIELD

The disclosure relates to an inspection camera for remote visual inspection of an interior of a cargo tank. The disclosure also relates to a method for remote visual inspecting an interior surface of a cargo tank by means of an inspection camera.

### BACKGROUND ART

Fluid cargo ships are used to transport various types of more or less liquid cargo, such as for example industrial chemicals, commodity chemicals, vegetable oils and petroleum-based chemicals or products such as crude oil, etc. The tankers usually have a double hull construction and may comprise one or more cargo tanks. The cargo tanks may be made from different chemical resistant materials, for example stainless steel, which is resistant to many chemicals from strong acids to vegetable oils. The inner surface of the cargo tanks may be coated to improve chemical resistance and facilitate cleaning. The cargo tanks may be arranged to carry different chemicals. Each cargo tank may comprise or be connected to an individual piping and pumping system to load and remove the cargo. After removing the content of the cargo from the cargo tank, it may be desirable that the tank can be used for carrying any type of chemical as the next cargo.

During transporting of for example petroleum product cargo or similar explosive or flammable cargo it is customary to fill up the remaining volume of the cargo tank with a protective gas, which may be an inert gas. Specifically, oil tankers typically carries oil of different grades and quality that generally produce flammable vapours and gases when loaded for transportation. Even with no cargo on board, there can be harmful flammable gases present in the cargo tank. When the vapour produced by for example an oil cargo is mixed with certain concentration of air primarily containing oxygen, it can result in dangerous explosion. For safety against such explosion, the cargo tank is filled up with the protective gas, which may provided for example by a separate protective gas plant or flue gas produced by the ship's boiler. The protective gas may be provided for example by exhaust gas from a diesel combustion engine.

When the cargo is removed from the tank, there may be a certain quantity remaining on board (ROB). This quantity includes the cargo chemicals, such as oil, water, sludge and sediment inside the cargo tanks and in the associated lines and pumps after the removal of the cargo has been completed. This amount of ROB should be kept as low as possible.

To ensure that the cargo tank is properly emptied, inspection personnel has traditionally been used to visually check the interior of the tank before next filling. This is very time consuming, especially when an inert atmosphere in the tank needs to be replaced with oxygen containing atmosphere for the inspection, and subsequently filled with inert gas again after the inspection is finished. In addition to being time consuming, such inspection is energy requiring, costly and non-environmental friendly. Therefore, there is a desire to facilitate the inspection procedure.

Different arrangements using camera inspection have been used to facilitate the inspection of the tank interior. For example, JP 2003-294635A shows an inspection camera being lowered into a cargo tank via a tank opening. However, the size of the inspection camera and associated suspension arrangement is very large making it complicated to perform a camera inspection without leakage of protective gas from the tank via the tank opening, thereby requiring an undesirable evacuation of the protective gas.

WO 2013/038550 A1 discloses an underwater inspection apparatus for inspection inside a nuclear reactor. The underwater inspection apparatus comprises a camera unit. The camera unit is fixed using a camera fixing jig. The camera unit is provided with an illumination unit at an upper portion. The illumination unit is attached to the camera fixing jig and the connecting portion is connected by a lightning unit up-and-down moving joint for changing the direction of the light in the vertical direction. Further, in order to change the left and right directions of the light, a plurality of lighting unit links are connected by lighting unit lateral moving joints.

US 5 565 981 A discloses an inspection apparatus for viewing and making video recordings of the interior of an enclosed space of an enclosure having an elongated body. The inspection apparatus includes an elongated hollow housing intended to be inserted through an access opening of a tank, vessel, or other confined space. A sealed light housing and a video camera/recorder housing are affixed by a threaded latch assembly to the bottom of the housing. The latch assembly permits the video camera/recorder housing to be pivotally adjusted relative to the axis of the housing and be fixed at a selected position. The light housing is mounted on the video camera/recorder housing by a threaded bracket assembly to permit pivotal movement for selective adjustment and includes a threaded member that can be tightened to position the light housing at a fixed selected position.

### SUMMARY OF THE DISCLOSURE

A general object of the present disclosure is to provide an inspection camera for remote visual inspection of an interior of a cargo tank that enables visual inspection of the tank without need for evacuation of any protective gas. Furthermore, it is desirable that the inspection camera can be inserted into and removed out of the interior of the tank in a simple and fast way and through existing openings of the cargo tank. Finally, it is desirable that the inspection camera provides high quality images from the interior of the tank, also during poor visibility conditions, such as for example foggy conditions.

These and other objects, which will become apparent in the following, are at least partly accomplished by an inspection camera and corresponding method as defined in the accompanying claims.

According to a first aspect of the present invention, there is provided an inspection camera for remote visual inspection of an interior of a cargo as defined in claim 1.

According to a second aspect of the present invention, there is provided a method for remote visual inspecting of an interior of a cargo tank by means of an inspection camera as defined in claim 14.

The larger distance between the camera light and the image capturing device in the inspection mode than in the insertion mode is obtained by movement of the arm. In a similar wording, the difference in distance between the camera light and the image capturing device in the inspection mode than in the insertion mode is obtained by movement of the arm.

By means of the variable lateral distance between the camera light and the image capturing device and the larger lateral distance in the inspection mode than in the insertion mode, the inspection camera can be made very small in the inserted mode, thereby enabling insertion into the tank through for example a valve for ensuring a leak-tight passage of the inspection camera into and out from the cargo tank without need for prior evacuation of any protective gas. In addition, the inspection camera may be made small enough to be inserted through existing relatively small openings of the cargo tank, thereby providing a cost-effective solution for remote visual inspection of the cargo tank. To conclude, the small lateral dimension of the inspection camera in the insertion mode enables a cost-efficient and fast inspection of the cargo tank.

Moreover, the larger lateral distance in the inspection mode than in the insertion mode enables an improved quality of the visual image provided by the inspection camera. Upon unloading of for example a petroleum product cargo, or other flammable cargo, protective gas is generally filled into the cargo tank for replacing the unloaded cargo product. However, the most economic and adequate way to produce protective gas on board is often to make use of the flue gas from the ship boiler, or exhaust gas from a diesel combustion engine. The protective gas is passed through a scrubber or similar gas cleaning device for cooling and cleaning the gas from soot and sulphur dioxide before entering the cargo tank, because it is undesirable to have settlement of soot in the cargo tanks, and sulphur dioxide may cause corrosion in the cargo tank.

Protective gas having been cleaned by a scrubber or the like generally has a high humidity level caused by the gas cleaning process, thereby at least initially making the conditions within the cargo tank very foggy, and thus also highly light reflective. With time, the temperature of the protective gas sinks, the water condensates on the interior surface of the cargo tank and the relative humidity thus sinks, making the visibility conditions better. However, for reducing waiting time, it is desirable to capture high visibility images by means of the inspection camera also during more or less foggy conditions with the cargo tank. This is accomplished by having the camera light and the image capturing device laterally displaced in the inspection mode, because thereby less amount of light reflections generated by light from the camera light being reflected by the highly reflective foggy protective gas is received by the image capturing device. In other words, with gradually increased lateral distance between the camera light and the image capturing device, gradually less light reflections from the camera light are received by the image capturing device, thereby gradually improving the visibility quality of the images captured by the image capturing device.

Consequently, the inspection camera and corresponding method for remote visual inspecting enables visual inspection of the tank without need for evacuation of protective gas, insertion of the inspection camera into the interior of the tank in a simple and fast way, and capturing high quality images from the interior of the tank, also during poor visibility conditions, such as for example foggy conditions.

Further advantages are achieved by implementing one or several of the features of the dependent claims.

In one example embodiment, the arm is spring-loaded towards the second position. This enables automatic shift to the inspection mode upon insertion of the inspection camera into the cargo tank, as well as automatic shift back to the insertion mode upon withdrawal of the inspection camera from the cargo tank.

In one example embodiment, the arm is configured for automatic shift to the inspection mode upon release in the insertion mode. Thereby, a simplified, reliable and cost-efficient inspection camera is provided, and if a low power design of the inspection camera is desired this may be more easily accomplished.

In one example embodiment, the arm is configured to perform a pivotal motion when shifting between the insertion mode and the inspection mode. This enable a reliable and easily implemented solution for providing the required motion of the arm.

As mentioned above, the arm has an elongated shape extending substantially along the longitudinal direction in the insertion mode. Further specified, the arm may have an elongated shape extending substantially along the longitudinal direction of the housing in the insertion mode, or the arm may have an elongated shape extending substantially along the longitudinal direction of the inspection camera in the insertion mode. In other words, the arm may have an extension substantially coinciding with the longitudinal direction in the insertion mode. Further specified, the arm may have an extension substantially coinciding with the longitudinal direction of the housing in the insertion mode or the arm may have an extension substantially coinciding with the longitudinal direction of the inspection camera in the insertion mode.

In one example embodiment, the arm has an elongated shape with a first end region and a second opposed end region, wherein the first end region is pivotally fastened to the housing, and wherein the camera light or image capturing device is located at the second end region. This arrangement ensure a relatively large change in terms of lateral distance between the image capturing device and camera light when performing a relatively small pivotal motion.

In one example embodiment, the housing comprises a first longitudinal end region. The housing may also comprise a second longitudinal end region. The second longitudinal end region is located at an opposite end, i.e. at an opposite end of the housing, or more precisely at an opposite end of the elongated housing. The second longitudinal end region is located at an opposite end in relation to the first longitudinal end region. The first longitudinal end region and the second longitudinal end region are located at opposite ends of the housing, i.e. of the elongated housing.

In one example embodiment, the camera light or image capturing device is located at the second longitudinal end region of the housing. The location of the camera light or image capturing device at the second end of the housing enables a proper inspection of the interior surface of the cargo tank. It is also a location that simplifies arrangement in an elongated housing and enables reduction of the lateral dimension of the housing.

In one example embodiment, the inspection camera comprises a flexible rope-shaped structure fastened to the first longitudinal end region of the housing. Thereby, the desired orientation of the elongated direction of the inspection camera parallel to the vertical direction is automatically accomplished. Further, the inspection camera can be vertically transported and held in position in the vertical direction by means of the flexible rope-shaped structure. The flexible rope-shaped structure may be a cable, a wire, a rope or similar. The flexible rope-shaped structure may alternatively or additionally be denoted flexible elongated structure, such as flexible elongated rope-shaped structure.

In one example embodiment, the flexible rope-shaped structure is a cable. Thereby, the data is conveniently transmitted outside the tank. This may be formulated as that the inspection camera comprises a cable fastened to the first longitudinal end region of the housing and configured for transmitting image data acquired by the inspection camera to a remote image data handling device.

In one example embodiment, the camera light or image capturing device is located at the second longitudinal end region of the housing and configured for illuminating or capturing images, respectively, of a lower interior side of the cargo tank when hanging in the flexible rope-shaped structure, such as the cable .

In one example embodiment, the inspection camera comprises a cable fastened to a first longitudinal end region of the housing and configured for transmitting image data acquired by the inspection camera to a remote image data handling device. Thereby, the desired orientation of the elongated direction of the inspection camera parallel to the vertical direction is automatically accomplished. Further, the data is thereby conveniently transmitted outside the tank. By using a cable, the inspection camera is vertically transported and held in position, oriented in the desired direction and data is conveniently transmitted, all this by one single element.

In one example embodiment, the camera light or image capturing device is located at a second longitudinal end region of the housing and configured for illuminating or capturing images, respectively, of a lower interior side of the cargo tank when hanging in the cable. The location of the camera light or image capturing device at the lower end of the housing enables a proper inspection of the lower surface of the cargo tank, for example when determining remaining on-board (ROB) cargo inspection.

In one example embodiment, the housing comprises a locking device configured for temporary locking of the arm in the insertion mode and remotely controlled release of the arm from the insertion mode. This may be advantageous when the inspection camera, and particularly the arm, for some reason interfere with the inspection opening during insertion of the inspection camera into the cargo tank.

In one example embodiment, the housing has a recess located in a lateral side surface, and the arm, specifically the arm together with the camera light or image capturing device, may be located in said recess when the arm is in the insertion mode. Thereby, the arm does not protrude beyond a cylindrical circumference of housing, such that the housing may be made larger without interfering with the inspection opening during insertion of the inspection camera into the cargo tank.

In one example embodiment, the housing and arm are configured for enabling automatic shift of the arm to the insertion mode when the inspection camera is pulled out through an inspection opening of the cargo tank. Thereby, a simplified, reliable and cost-efficient inspection camera is provided, and if a low power design of the inspection camera is desired this may be more easily accomplished.

In one example embodiment, the camera light is in the inspection mode located at a distance in the longitudinal direction from the first end of the housing that is substantially equal to or smaller than the distance in the longitudinal direction between the image capturing device and the first end of the housing. In other words, the camera light may in the inspection mode be longitudinally offset towards the first end of the housing in relation to the image capturing device or located at a substantially equal longitudinal distance from the first end of the housing as the image capturing device. Alternatively formulated, the camera light may in the inspection mode have an offset in relation to the image capturing device in the longitudinal direction towards the first end of the housing of about zero or more. Thereby, it is prevented that light from the camera light hits the image capturing device, such as the optics including the lens of the image capturing device. Reflections from the camera light is thereby less interfering with the image capturing device.

In one example embodiment, the inspection camera, when having the arm in the insertion mode, may be inserted through a circular opening having a diameter of 2.54 cm (1 inch). Thereby, already available openings in for example top plates of submerged cargo pumps may be used as inspection openings for the inspection camera.

In one example embodiment, the lateral distance between the camera light and the image capturing device is in the range of 25 - 300 mm, specifically, 50 - 200 mm, and more specifically 75 - 125 mm, in the inspection mode. These ranges are deemed to provide a substantially improved image quality in foggy conditions within the cargo tank.

In one example embodiment, the inspection camera further comprises an additional image capturing device directed towards a lateral side of the inspection camera, and an additional camera light directed approximately in the same direction as the additional image capturing device. Thereby, the inspection camera may be used for side-looking inspection also.

In one example embodiment, the disclosure relates to an arrangement comprising an inspection camera as described above, and a cargo tank with an inspection opening, wherein the inspection opening has a diameter of 2.54 cm (1 inch), wherein the inspection camera, when having the arm in the insertion mode, may be inserted through said inspection opening, and wherein a lateral distance between the camera light and the image capturing device is in the range of 25 - 300 mm, specifically, 50 - 200 mm, and more specifically 75 - 125 mm, in the inspection mode.

In one example embodiment, the disclosure relates to an arrangement comprising an inspection camera as described above, and a submerged cargo pump with a top plate having an inspection opening, wherein the inspection opening has a diameter of 2.54 cm (1 inch), wherein the inspection camera, when having the arm in the insertion mode, may be inserted through said inspection opening, and wherein a lateral distance between the camera light and the image capturing device is in the range of 25 - 300 mm, specifically, 50 - 200 mm, and more specifically 75 - 125 mm, in the inspection mode. In one example embodiment, the method described above additionally comprises the following two steps: raising the inspection camera by pulling the cable, and pulling the inspection camera out through the inspection opening of the cargo tank, wherein the arm automatically shifts to the insertion mode upon sliding contact with a structure associated with the inspection opening.

Further features of, and advantages with, the present disclosure will become apparent when studying the appended claims and the following description.

### BRIEF DESCRIPTION OF THE DRAWINGS

The various example embodiments of the disclosure, including its particular features and example advantages, will be readily understood from the following illustrative and non-limiting detailed description and the accompanying drawings, in which:
Fig. 1 shows a side view of a cargo ship having fluid cargo tanks,
Figs. 2 shows an example embodiment of a cargo tank with an inserted inspection camera,
Fig. 3 shows a further example embodiment of a cargo tank with a submerged cargo pump and an inserted inspection camera,
Fig. 4a and 5a show side-views of an example embodiment of the inspection camera in the inspection mode and insertion mode, respectively,
Fig. 4b and 5b show end-views of the inspection cameras of fig. 4a and 5a, respectively,
Fig. 6a-6d show an inspection camera insertion sequence,
Fig. 7 shows a side-view of still a further example embodiment the inspection camera,
Fig. 8a-8b show magnifications of the spring-loaded attachment of the arm to the housing,
Fig. 9a-9b show an alternative embodiment of the spring-loaded attachment of the arm to the housing,
Fig. 10a-10b show still a further alternative embodiment of the spring-loaded attachment of the arm to the housing,
Fig. 11 shows a locking arrangement of the arm,
Fig. 12 shows a side-looking inspection camera,
Fig. 13a-13b show further example embodiments of the inspection camera,
Fig. 14a-14b show still further example embodiments of the inspection camera,
Fig. 15a-15b show even further example embodiments of the inspection camera,
Fig. 16 shows a first embodiment of a method for inspecting a cargo tank, and
Fig. 17 shows a further embodiment of said method.

### DETAILED DESCRIPTION OF EXAMPLE EMBODIMENTS OF THE DISCLOSURE

The present disclosure will now be described more fully hereinafter with reference to the accompanying drawings, in which exemplary embodiments of the disclosure are shown. The disclosure may, however, be embodied in many different forms and should not be construed as limited to the embodiments set forth herein; rather, these embodiments are provided for thoroughness and completeness. Like reference characters refer to like elements throughout the description. The drawings are not necessarily to scale and certain features may be exaggerated in order to better illustrate and explain the exemplary embodiments of the present disclosure.

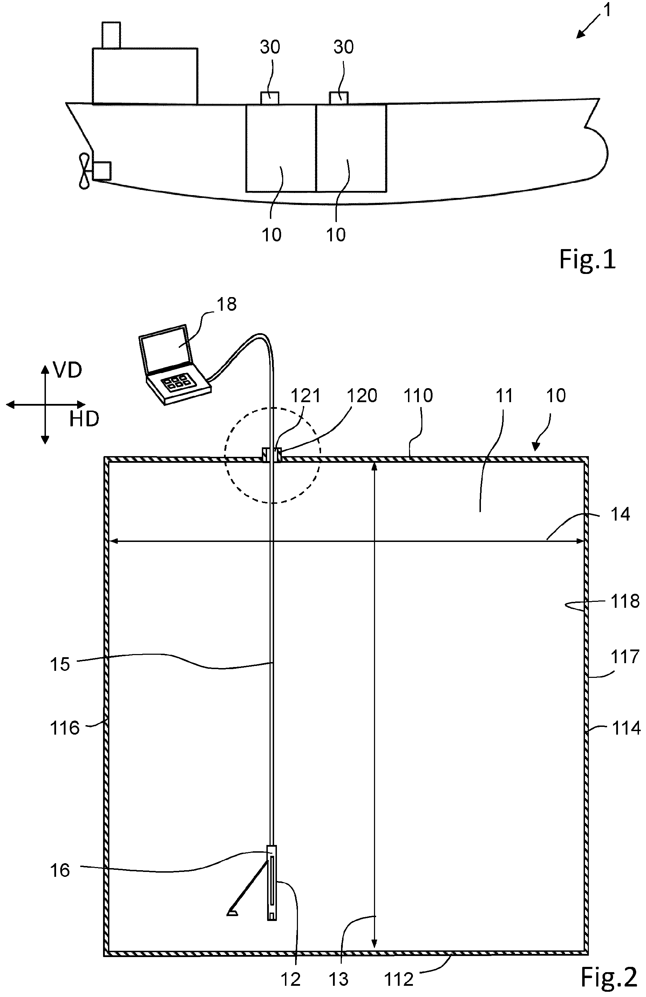

Fluid cargo tankers may include several cargo tanks. Fig. 1 schematically illustrates an example of a cargo tanker 1, which comprises two fluid cargo tanks 10. The cargo tanks 10 may be used to transport bulk chemicals, such as industrial chemicals, commodity chemicals, vegetable oils, crude oil or petroleum-based chemicals or products. The cargo tanks may be made of a chemical resistant material and may comprise an outer wall of stainless steel. The inner surface of the tank may be coated, e.g. to provide a surface that can be easily cleaned.

On a deck of the tanker, one or more so called deck trunks 30 may be located. These deck trunks 30 are associated with a respective cargo tank and the purpose of the deck trunks is to provide space for access to the interior of the cargo tanks 10. The deck trunk 30 may have a structure, which is raised above the deck surface, such as for example a cylindrical shape. The deck trunk 30 may also extend a certain length inside the interior of the cargo tank. The height and the diameter or length and depth dimensions of the deck trunk may vary. An upper opening of the deck trunk is typically closed by means of a top plate that may be fastened to an upper rim of the deck trunk 30. The top plate may comprise fluid pipe interfaces or connections for loading/unloading pipes, pumps, venting arrangements for example, or may provide an inspection access port to the interior of the cargo tank 10.

Figure 2 schematically illustrates an example embodiment of a remote visual inspection of an interior 11 of a cargo tank 10 using an inspection camera 12. More in detail, the cargo tank comprises an upper wall 110 and a lower wall 112. The cargo tank may be circular cylindrical, wherein it has one circular side wall, or it may have a quadrilateral cross section and thus comprise four side walls, two of which have been depicted in Fig. 2 as 114 and 116. However, the cargo tank may alternatively have any other suitable cross-sectional shape. The upper wall, lower wall and the side wall(s) define a tank volume. The cargo tank has an outer surface 117 and an interior surface 118. The interior height 13 of the tanks in a vertical direction VD may also vary greatly and may be up to for example 40 meters, but is not limited thereto. The interior length 14 of a cargo tank 10 in a horizontal direction HD may for example be in the range of 10 - 30 metres, but is not limited thereto. The upper wall 110 comprises a tank interface 120, which may comprise an opening 121 to the tank interior 11.

In figure 2, the inspection camera 12 hangs in a cable 15 that extends from an exterior of the tank 10, through the opening 121, and into the interior 11 of the tank 10. The vertical position of the inspection camera 12 may thus easily be adjusted by merely pulling or pushing the cable out/in through the opening 121, thereby raising or lowering the inspection camera 12. This may for be made manually by a user. The cable 15 is fastened to a first, upper, longitudinal end region 16 of the inspection camera 12. The cable 15 may alternatively be another flexible rope-shaped structure, such as a wire or rope.

The cable 15 is configured for transmitting image data acquired by the inspection camera 12 to a remote image data handling device 18, which in figure 2 is illustrated as a mobile computing device with a display. The image data handling device 18 may for example be a mobile phone, a tablet, a laptop, a dedicated computing device, a display, a wired or wireless transmitter for transmitting image data to a remote user and/or a server, a data storage device. The image data may for example be displayed to a user, or a computing device may execute an image data analysing software and merely generate a result, such as empty, clean, etc.

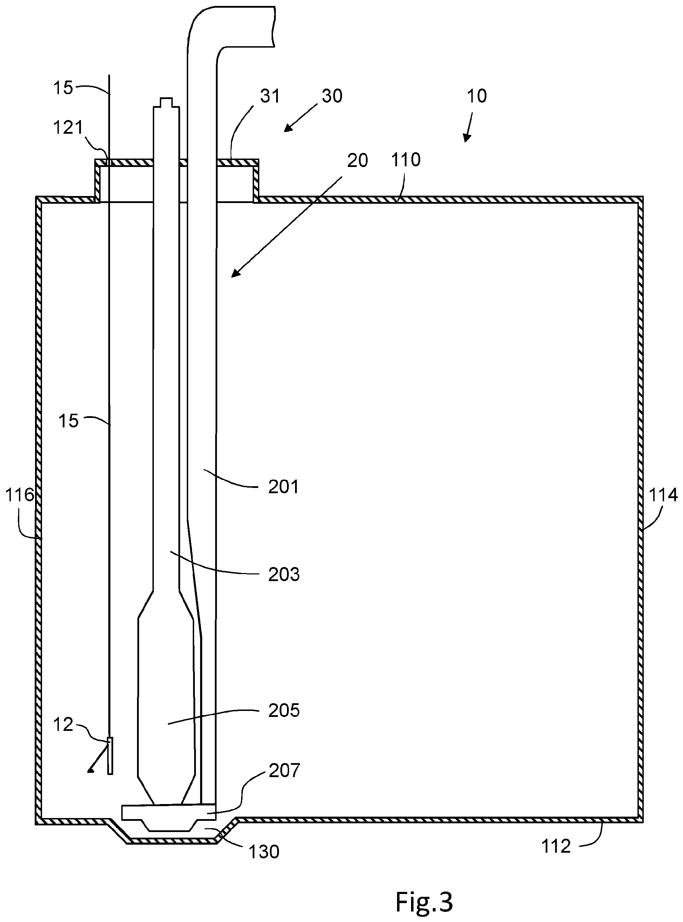

Figure 3 schematically illustrates a further example embodiment of a remote visual inspection of an interior 11 of a cargo tank 10 using an inspection camera 12. In this example embodiment, the cargo tank 10 comprise an arrangement for loading and/or unloading of the cargo. Specifically, a submerged cargo pump 20 is provided for this purpose. By submerged cargo pump 20 is meant a pump arranged to be positioned at a level below the surface level of the fluid cargo typically carried within the cargo tank 10, i.e. typically near the bottom of the tank 10. Piping is connected to the pump for unloading of the cargo. The piping of the pump may be permanently fixed to a side surface of the cargo tank. The submerged cargo pump may be of a vertical structure and comprise a hydraulically driven centrifugal pump. By vertical structure is meant that the pump extends between a top and a bottom of a cargo tank in vertical direction. Submerged cargo pumps are available on the market and are provided for example by a company Framo^{®}.

In the illustrated example embodiment of figure 3, the tank 10 comprises a deck trunk 30 having top plate 31 with an inspection opening 121. The submerged cargo pump 20 may for example comprise a hydraulic drive unit 205 connected to a centrifugal pumping unit 207 located at the bottom of the tank 10. Suitably the centrifugal pumping unit 207 is associated with a suction well 130 of the tank 10. The suction well 130 suitably defines the lowermost location in the bottom of the tank 10, whereby residual fluid cargo can be collected by means of gravity into the suction well, e.g. after removal of the nearly all fluid cargo from the tank. The submerged centrifugal pumping unit 207 may comprise for example an impeller to actuate the centrifugal motion of the fluid cargo. Further the submerged cargo pump 20 may comprise a cargo pipe 201 and a hydraulic return/pressure pipe 203 for powering the pumping unit 207. The pipes 201 and 203 passes through the top plate 31 of the deck trunk 30. The submerged cargo pump 20 may thus extend between the suction well 130 and the deck trunk 30.

The top plate 31 typically has many different types of fluid pipe connections and openings for enabling connection with the submerged cargo pump 20, but also for inspection openings. In figure 3, an inspection camera 12 has been inserted through an inspection opening 121 in the top plate 31 and subsequently lowered to a position close the suction well 130 of the tank 10. At this position, the inspection camera may capture images of the lower surface of the tank for inspection of for example remaining on-board cargo level, or other general inspection purposes.

The present disclosure aims to facilitate and make inspection of the interior surface of a cargo tank faster and simpler, and safer from the working environment safety view. Further, it is an objective to make the inspection more energy saving and more environmentally friendly, since a protective gas atmosphere inside the cargo tank needs not be emptied and refilled for an inspection.

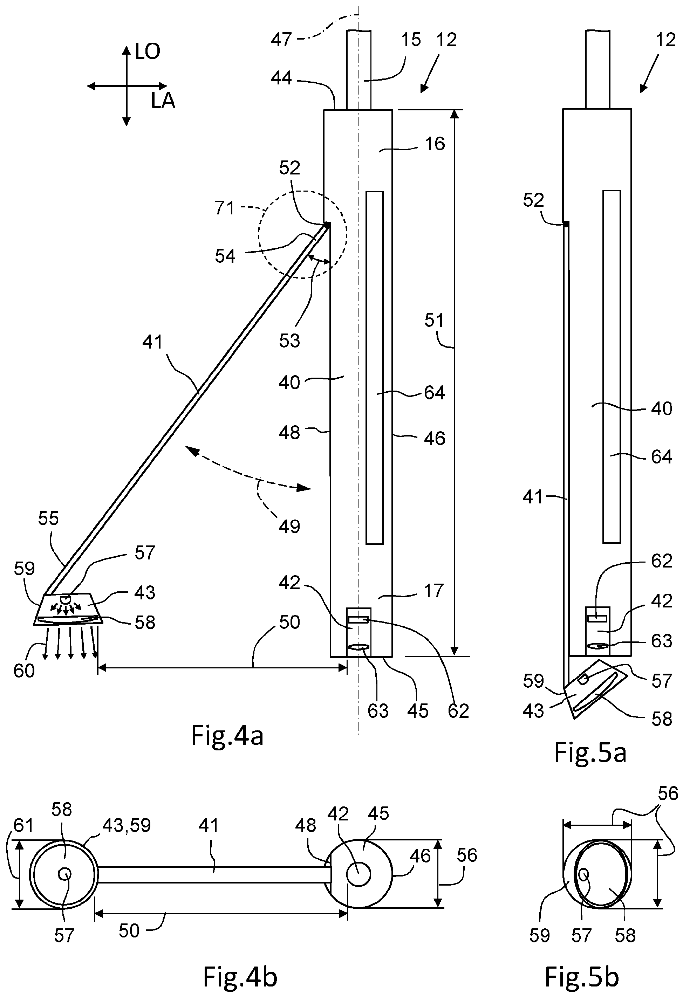

Figure 4a and 5a shows a side-view of an inspection camera 12 according to an example embodiment of the disclosure in an inspection mode and insertion mode, respectively, that at least partly meets the above-mentioned objectives.

The inspection camera 12 is suitable for remote visual inspection of an interior of a cargo tank 10. The inspection camera comprises a housing 40 having an elongated shape extending along a longitudinal direction LO, a moveable arm 41 attached to the housing 40 and moveable between a first position corresponding to an insertion mode and a second position corresponding to an inspection mode, an image capturing device 42 oriented for capturing images in the longitudinal direction LO, and a camera light 43. Moreover, one of the image capturing device 42 and the camera light 43 is located on the housing 40 and the other of the image capturing device 42 and the camera light 43 is located on the arm 31, such that a lateral distance 44 between the camera light 43 and the image capturing device 42 is larger in the inspection mode than in the insertion mode.

In particular, in the example embodiment of the inspection camera 12 showed in figures 4a and 5a, the image capturing device 42 is located on the housing 40 and the camera light 43 is located on the arm 31.

The insertion mode herein refers to the arrangement of the arm upon inserting the inspection camera through an inspection opening 121 in the upper wall of the cargo tank 10 or top plate 31, or the like. Due to the very similar arrangement of the arm during removal of the inspection camera from the cargo tank, the insertion mode herein also refers to the arrangement of the arm upon withdrawing the inspection camera through said inspection opening 121 during removal of the inspection camera 12.

The diameter of an inspection opening 121 is generally relatively small for enabling simplified opening and closing of the inspection opening and/or due to packaging constraints associated with the top plate 31. For example, the top plate 31 of submerged cargo pumps provided by the company Framo^{®} typically includes at least one opening suitable for inspection of the interior of the cargo tank with a diameter of 1.54 cm (1 Inch). Thereby, an insertion or removal of the inspection camera 12 and cable 15 may be accomplished without or with only little leakage of protective gas from the cargo tank, at least when combined with a suitable sealing arrangement at the opening. Consequently, the insertion mode of the arm is associated with a substantially minimal outer dimension of the inspection camera 12 in the lateral direction LA for enabling the inspection camera to pass through the relatively small diameter inspection opening 121.

Although the arm 41 is illustrated as being located entirely flush and parallel with a longitudinal direction LO of the inspection camera 12 in the insertion mode corresponding to figure 5a, i.e. at a position corresponding to an absolutely minimal outer dimension of the inspection camera 12 in the lateral direction LA, the arm 41 may in fact alternatively be located in a position more or less offset from the depicted entirely flush position while still being located in the insertion mode, because the position of the arm 41 in the insertion mode may in some example embodiments of the disclosure be dependent on the size and shape of the inspection opening 121 in the cargo tank 10. This may for example occur when the arm 41 is spring-loaded towards the second position, such that the position of the arm 41 during insertion through the inspection opening 121 depends on the size and shape of the inspection opening 121, as long as the inspection opening 121 is sufficiently small to prevent the inspection camera 12 to be inserted while being in the inspection mode. In other words, a spring-loaded arm 41 would slide along an interior surface of a relatively small inspection opening 121, or other associated surface, when being inserted through the inspection opening 121, and this position of the arm 41 would then correspond to the first position of the arm, corresponding to the insertion mode.

The inspection mode of the arm herein refers to the arrangement of the arm during capturing of images of the lower interior surface of the cargo tank 10 by means of the image capturing device 42. In this mode there is no need for small outer dimension of the inspection camera 12 in the lateral direction LA because there is sufficient space available within the interior of the cargo tank. Instead, the inspection mode of the arm is associated with an arrangement that enables clear and high-quality images of the interior of the cargo tank, especially during foggy conditions. This is accomplished by having the image capturing device and camera light offset from the each other in the lateral direction LA in the inspection mode, because thereby the reflections of the camera light being reflected back by the water droplets in the foggy protective gas into the image capturing device is reduced, compared with a design when the image capturing device and camera light are located closed to each other in the lateral direction LA.

The longitudinal direction LO of the housing 40 is typically parallel with the vertical direction VD of the tank 10 when the inspection camera 12 is lowered into a cargo tank 10 via an inspection opening in an upper wall 110 of the tank 10, as showed for example in figures 2 and 3, simply because the inspection camera 12 is configured to be hanging in the cable 15 that is fastened to the first, upper, longitudinal end region 16 of the inspection camera 12.

The inspection camera 12 further comprises a second, lower, longitudinal end region 17 that is located on the opposite side of the housing, as seen in the longitudinal direction LO.

In the example embodiment of the inspection camera 12 illustrated in figure 4a and 5a, the housing 40 has an elongated shape oriented along the longitudinal direction LO of the inspection camera 12. In other words, the housing 40 has a substantially straight and linear elongated shape, for example with a generally cylindrical, polygon-shaped, or mixed-shaped cross-section, as seen in a lateral plane of the inspection camera 12. A central axis 47 extending through the housing 40 along the elongated direction of the housing is thus substantially parallel with the longitudinal direction LO of the inspection camera 12. Moreover, the housing 40 further has a first, upper, longitudinal end surface 44, a second, lower, longitudinal end surface 45, and a lateral side surface 46 extending around the circumference of the housing 40 and between the upper and lower end surfaces 44, 45.

Figure 4b and 5b show an axial view of the inspection camera 12 according to the example embodiment of figure 4a and 5a in an inspection mode and insertion mode, respectively. In other words, figure 4b and 5b show the inspection camera as seen from below in the inspection mode and insertion mode, respectively. Figure 4b clearly shows that the housing according to this example embodiment has a substantially cylindrical-shaped lateral side surface 46, i.e. a substantially circular cross-section, as seen in a lateral plane of the inspection camera 12. A face of the down-wards directed image capturing device 42 is also depicted in figure 4b.

In the example embodiment of the inspection camera illustrated in figures 4a-5b, the arm 41 is configured to perform a pivotal motion when shifting between the insertion mode and the inspection mode. This pivotal motion is schematically illustrated by a motion-arrow 49 in figure 4a. Since one of the image capturing device 42 and the camera light 43 is located on the housing 40 and the other of the image capturing device 42 and the camera light 43 is located on the arm 31, a variable lateral distance 44 between the camera light 43 and the image capturing device 42 is accomplished, wherein the lateral distance is larger in the inspection mode than in the insertion mode.

By means of a relatively small lateral distance between the camera light 43 and the image capturing device 42 in the insertion mode, the inspection camera 12 may be made compact and enabling insertion into the cargo tank 10 even through very small openings 121 in the cargo tank 10. Moreover, the opening 121 in the cargo tank 10 may more easily be provided with a suitable sealing device for enabling insertion/withdrawal of the inspection camera 12 in a leak-tight manner, such that remote visual inspection of the cargo tank 10 may be performed without need for prior evacuation of any protective gas, thereby significantly speeding up overall inspection time.

Furthermore, the larger lateral distance in the inspection mode than in the insertion mode enables an improved quality of the visual image provided by the inspection camera 12, especially during foggy or high relative humidity conditions within the cargo tank 10, which may occur in connection with unloading of the cargo and insertion of a protective gas that must be cleaned with a scrubber or the like before being supplied to the cargo tank 10, as discussed above.

In particular, by having the camera light 43 and the image capturing device 42 laterally displaced in the inspection mode, less amount of light reflections generated by light from the camera light 43 is reflected by the highly reflective foggy protective gas to the image capturing device 42, because light is generally primarily reflected back towards the camera light 43 when operated during foggy conditions. In other words, with gradually increased lateral distance between the camera light 43 and the image capturing device 42, gradually less light reflections from the camera light 43 is received by the image capturing device 42, thereby gradually improving the visibility quality of the images captured by the image capturing device 42.

The lateral distance 50 between the camera light 43 and the image capturing device 42 in the inspection mode is significantly larger than the lateral distance 50 between the camera light 43 and the image capturing device 42 in the insertion mode. The lateral distance 50 herein refers to the distance in the lateral direction LA, which is perpendicular to the longitudinal direction LO of the housing 40. In figure 5a, which shows the arm 41 in the insertion mode, the camera light 43 and image capturing device 42 are essentially overlapping each other in the longitudinal direction LO, thereby eliminating any lateral distance between the camera light 43 and image capturing device 42 zero. In other words, the lateral distance between the camera light 43 and image capturing device 42 is zero in the arrangement shown in figure 5a.

The lateral distance 50 between the camera light 43 and the image capturing device 42 in the inspection mode may for example be in the range of 10 - 150%, specifically 10 - 100%, and more specifically 30 - 70%, of a total length 51 of the housing 40 in the longitudinal direction LO. Too long lateral distance 50 relative to the longitudinal length 51 of the housing may result in an inclined housing in the inspection mode, and too short lateral distance 50 may result in large level of light reflections from the camera light 43 being captured by the image capturing device 42, both of which are undesirable. Hence, the specified relative length represents appropriate relative dimensions for enabling simple handling of a compact inspection camera 12, sufficient lateral distance 50 between the camera light 43 and the image capturing device 42 in the inspection mode for significant reduction in light reflections from the camera light 43, and a vertically oriented housing.

Specifically, the lateral distance between the camera light 43 and the image capturing device 42 may be in the range of 25 - 300 mm, specifically, 50 - 200 mm, and more specifically 75 - 125 mm, with the arm 41 in the inspection mode. These dimensions are deemed resulting in significant reduction in light reflections from the camera light 43.

The arm 41 may be pivotally attached to housing 40 at a pivot point 52. The pivot point 52 may for example be located on the lateral side surface 46 of the housing, as illustrated in figure 4a and 5a.

The pivot point 52 may for example be located in the upper half of the housing 40, because thereby the exterior surface of the housing 40 may provide support to a relatively long length of the arm 41 when located in the insertion mode.

When the arm 41 is pivotally attached to housing 40, the insertion mode of the arm 41 may alternatively be referred to as a folded mode or folded state of the arm 41, and the inspection mode of the arm 41 may alternatively be referred to as an unfolded mode or unfolded state of the arm 41

An angle 53 between a longitudinal direction of the arm 41 and the longitudinal direction LO of the housing 40 in the inspection mode may be in the range of 20 - 90 degrees, specifically, 30 - 80 degrees. Thereby, automatic shift to the insertion mode may more easily be accomplished upon engagement with the interior surface of the inspection opening 121 of the cargo tank 10.

In addition, a length of the arm 41 may be in the range of 60 - 100%, specifically 70 - 90% of the total length 51 of the housing 40 in the longitudinal direction LO.

As shown in figure 4a, 4b and 5a, the housing may be provided with a recess 48 located in the lateral side surface 46 thereof, and the arm 41 may be located in said recess 48 when the arm is in the insertion mode. The recess 48 enables a flush mounting and arrangement of the arm 41 to the housing 40 when in the insertion mode, such that the inspection camera 12 may be inserted in very narrow inspection openings 121.

Inspection openings 121 mostly have a circular cross-section and when also the housing 40 has a circular cross-section an arm 41 mounted on the exterior circular surface of the housing would laterally protrude a certain distance, also when in the insertion mode, thereby requiring a reduction in diameter of the housing, but such miniaturization typically results in increased cost and less strong inspection camera 12. However, when the housing is provided with a recess 48 located in the lateral side surface 46 thereof, and the arm 41 being configured for enabling the arm to be located in said recess 48 when the arm is in the insertion mode, the diameter of the housing 40 may be increased to just below the diameter of the inspection opening 121, thereby providing a stronger and more spacious housing 40.

The recess 48 may for example correspond to a circle segment that extends along a suitable length of the housing in the longitudinal direction LO, as illustrated in figures 4a, 4b and 5a.

The arm 41 may be spring-loaded towards the second position. In other words, the second position corresponds to a natural position of the arm 41. Consequently, the arm 41 is configured for automatic shift to the inspection mode upon release in the insertion mode, or any other position of the arm 41. This has the advantage of enabling automatic deployment of the inspection camera 20 to the inspection mode upon insertion through the inspection opening 121. There is thus no need for any complex and costly controllable motion actuator that controls motion of the arm 41. Instead, the inspection camera may merely be inserted through the inspection opening 121 while being in the insertion mode, and subsequently, as soon as the arm no longer is engaging the interior surface of the inspection opening 121, the arm 41 is free to move to the second position that corresponds to the inspection mode.

Moreover, having the arm 41 spring-loaded towards the second position also enables simple withdrawal of the inspection camera out through the inspection opening 121, because the arm 41 may simply be pushed towards the first position corresponding to the insertion mode upon engagement with the interior surface of the inspection opening 121, it similar associated surface, thereby eliminating the need for any complex and costly controllable motion actuator that controls motion of the arm 41.

The spring-loading may for example be accomplished by a mechanical spring element that urges the arm 41 towards the second position, as will be described more in detail below.

The arm 41 may have an elongated shape with a first end region 54 and a second opposed end region 55, wherein the first end region 54 is pivotally fastened to the housing 40, and wherein the camera light 43 or image capturing device 42 is located at the second end region 55.

In the example embodiment of figure 4a-5b, the camera light 43 is located at the second end region 55.

The camera light 43 or image capturing device 42 is located at the second longitudinal end region of the housing 40 and is configured for illuminating or capturing images of a lower interior side of the cargo tank 10 when hanging in the cable 15.

In the example embodiment of figure 4a-5b, the image capturing device 42 is located at the second longitudinal end region of the housing 40.

The inspection camera 12 may, when having the arm 41 in the insertion mode, be inserted through a circular opening having a diameter of 2.54 cm (1 inch). In other words, the inspection camera 12 may, when having the arm 41 in the insertion mode, have a maximum dimension of a lateral cross section being 2.54 cm (1 inch) or less. For example, when the housing 40 has a circular cross-section and a recess enabling accommodation of the arm 41 such that the arm 41 does not protrude beyond the circular circumference of the housing 40, a diameter 56 of said circular housing is smaller than 2.54 cm, such as for example in the range of about 20 - 24 mm.

In the example embodiment of the inspection camera 12 shown in figure 4a-5b, the camera light 43 includes a light source 57 and a lens arrangement 58, which is configured for focusing the light emitted by the light source 57. The camera light 43 may further include a camera light casing 59 accommodating the light source 57 and lens arrangement 58. The camera light casing 59 may be an individual part that is attached to the arm 41. Alternatively, the light source 57 and lens arrangement 58 may be integrated in a body of the arm 41.

The light source is for example a light emitting diode (LED). Furthermore, the lens arrangement 58 may consist of a single lens or a combination of a plurality of lenses. The light 60 emitted from the camera light 43 is for example visual light, but may in some applications alternatively be non-visible light, such as IR-light, etc.

In the example embodiment of the inspection camera shown in figure 4a-5b, the camera light 43 is located in front of the image capturing device 42 in the insertion mode of the arm 41. Thereby, the outer dimensions of the inspection camera 12 may be made compact in the insertion mode. Specifically, the other dimension 61 of the camera light 43 is preferably smaller than the diameter 56 of the circular housing, such that the camera light 43 does not protrude beyond the circular circumference of the housing 40 in the insertion mode of the arm.

Moreover, even if the camera light 43 is located in front of the image capturing device 42 in the insertion mode of the arm 41, the camera light 43 may in some embodiments, such as for example in figures 4a-5b, advantageously be located behind the image capturing device 42 in the inspection mode, because thereby the reflections from the camera light 43 is less interfering with the image capturing device 42. Being located behind herein means that the camera light 43 is located further towards the first, upper, longitudinal end region 16 of the inspection camera 12 than the image capturing device 42.

In figure 5a, the inspection camera is showed from below and with the arm in the insertion mode, e.g. with the arm more or less folded or inclined towards the housing, potentially also abutting the housing. Due to the specific design of the inspection camera 12 of figure 4a-5b, wherein the camera light 43 is located in front of the image capturing device 42 in the insertion mode of the arm 41, figure 5b merely shows the casing 59 and associated features.

The image capturing device 42 typically includes an image sensor 62, such as for example a CCD image sensor or CMOS image sensor, as well as lens arrangement 63 configured for focusing the light received by the image capturing device 42. The lens arrangement 63 may consist of a single lens or a combination of a plurality of lenses. The inspection camera 12 is configured for capturing visual images in the form of photographs, film, or video signals.

The lens arrangement 63 may for example be configured for capturing images of a surface or objection that is located in the range of about 0.5 - 3 metres, specifically about 1 -2 metres, in front of the image capturing device 42, i.e. below the image capturing 42 the device when hanging in the cable 15. µJ

The inspection camera may further include an electronic circuitry 64, such as a printed circuit board (PCB) or the like, configured for processing the electrical signals received from the image sensor 62, and communicating with the remote image data handling device 18. The electronic circuitry 64 is thus in data communication with the image sensor 62 via suitable communication medium, such as digital electrical or optical communication (not showed). Similarly, the electronic circuitry 64 is also in data communication with the remote image data handling device 18 via suitable communication medium, such as digital electrical or optical communication (not showed) passing through the cable 15. The image sensor 62 and electronic circuitry 64 may optionally be located on the same electronic board.

Due to the often flammable and/or explosive cargo or cargo fumes, the inspection camera 12 may be designed as a very low electrical energy device. For example, following the current regulation provided by ATEX (EU directives) and IECEx (International Electrotechnical Commission System for Certification to Standards Relating to Equipment for Use in Explosive Atmospheres) electrical equipment, the inspection camera 12 should have an accumulated energy in the complete electrical circuit not exceeding 160 µJ (Micro Joule) when being used in Zone 0 or Zone 1 of fluid cargo ship. The present inspection camera 12 fulfils these requirements.

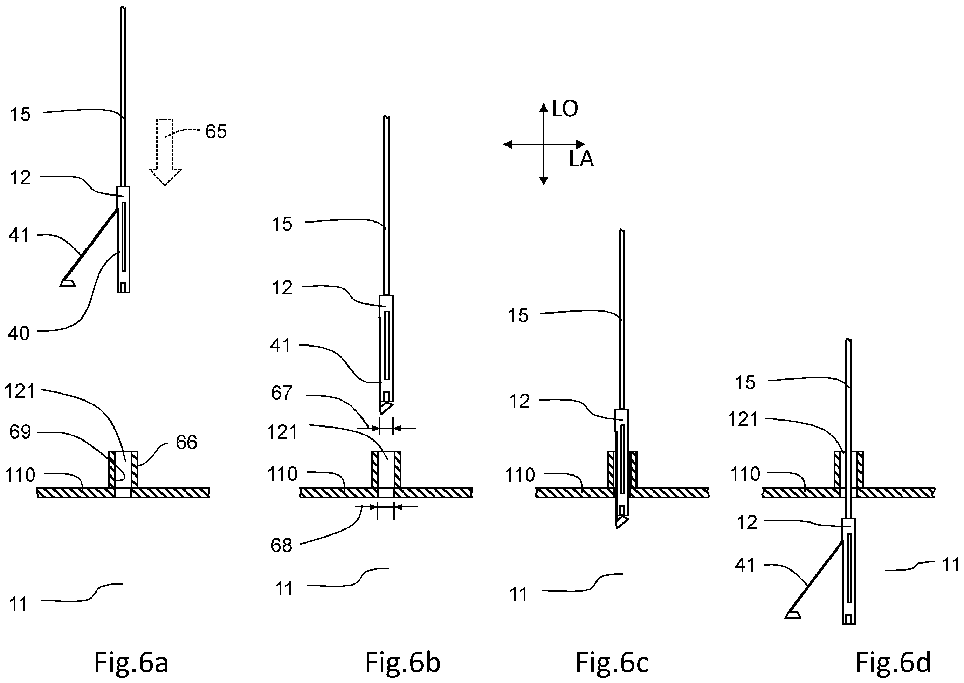

Figure 6a-6d schematically illustrates four distinct positions of the inspection camera 12 during motion of the inspection camera vertically downwards, as indicted by arrow 65, and subsequent insertion of the inspection camera 12 through the inspection opening 121 in the upper wall 110 of the cargo tank, and further into the interior 11 of a cargo tank 10.

In figure 6a, the inspection camera 12 is moved downwards and the arm 41 may be located in the inspection mode.

For enabling insertion of the inspection camera through the relatively narrow cylindrical inspection opening 121 the arm 41 is folded inwardly towards the housing 40 of the inspection camera 12, as schematically illustrated in figure 6b. This may for example be performed by having the user simply manually folding the arm 41 inwardly and holding that arm 41 in this position until at least a part of the inspection camera 12 and arm 41 have been inserted into the inspection opening 121.

Alternatively, the inspection camera 12 may prior to insertion into the cargo tank be located within a hollow and moveable airlock (not showed) that may be connected to an interface 66, such as a cylindrical connection sleeve, associated with the inspection opening 121 of the cargo tank 10 by means of appropriate locking means that may engage with corresponding locking means of the mobile air lock. Such an airlock including the inspection camera would in such case first be gas-tightly connected to the interface 66, and subsequently a valve (not showed) within the interface may be opened for enabling the inspection camera 12 to be inserted, past the valve and further into the cargo tank 10. The cable 15 would then be sealingly slidable within an opening located at an end of the air lock being remote from the corresponding locking means for enabling lowering of the inspection camera 12 to the lower surface of the tank 10. Moreover, as long as the inspection camera 12 is located within the airlock, the arm 41 may be held more or less in the insertion mode due to a limited radial space within such an airlock.

The maximal outer dimension 67 of the inspection camera 12 in the lateral direction LA in the insertion mode may be selected to be smaller than the minimal inner dimension 68 of the inspection opening 121 of the cargo tank 10. Thereby, insertion of the inspection camera 12 into and through the inspection opening 121 may be performed at any relative angular orientation of the inspection camera 12 and cargo tank 10. In other words, the user would not have to observe the relative angular position of the inspection camera 12, and that would thus simplify handling of the inspection camera 12 during the insertion process.

Figure 6c shows the inspection camera 12 being located approximately halfway inserted in the inspection opening 121, and with arm 41 in the insertion mode. At this stage of the insertion process the arm 41, due to the spring-loaded arrangement of the arm 41, is urged laterally outwardly and thus in sliding contact with an interior surface 69 of the inspection opening 121 or other structure associated with the inspection opening 121.

As soon as the inspection camera 12 has been inserted far enough into the interior of the cargo tank 10, the arm 41 will no longer contact the interior surface 69 of the inspection opening 121, and the spring-loaded arm 41 will then directly unfold and move with a pivotal motion to the second position, which corresponds to the inspection mode. In other words, the arm 41 is configured for automatic shift to the inspection mode upon release in the insertion mode.

Upon withdrawal of the inspection camera 12 from the cargo tank 10 and out through the inspection openings 121, the arm will automatically shift from the inspection mode to the insertion mode upon sliding contact with a structure associated with the inspection opening. On other words, there is no need for any complex and costly actuator that controls the motion of the arm 41, because the arm 41 will automatically become folded to the first position upon engagement and contact with the interior surface 69 of the inspection opening 121 or other structure associated with the inspection opening 121 upon withdrawal of the inspection camera 12.

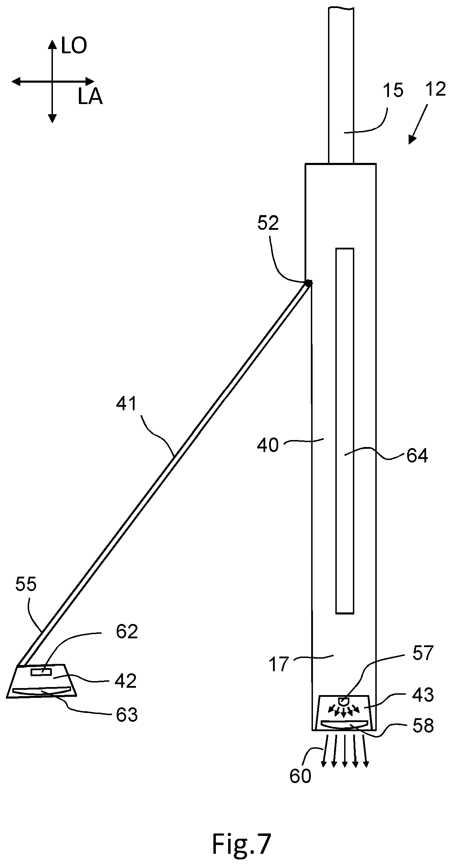

In the example embodiment of the inspection camera showed in 4a-5b, the image capturing device 42 is located on the housing 40 and the camera light 43 is located on the arm 41. However, this arrangement may be opposite as illustrated in figure 7, wherein the camera light 43 is located on the housing 41, specifically at a second, lower, longitudinal end region 17 of the housing 41, and the image capturing device 42 is located on the arm 41, specifically at the second end region 55 of the arm 41.

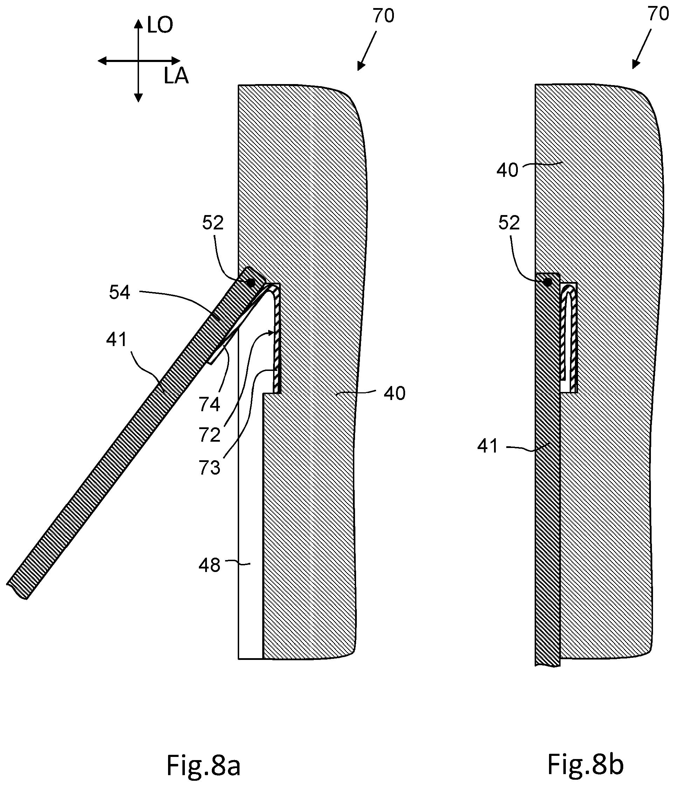

As described above, the arm 41 may be spring-loaded towards the second position, i.e. the unfolded position corresponding to the inspection mode. Figure 8a and 8b show region 70 of one example embodiment of the inspection camera 12 surrounding the pivot point 52 of the arm 41, which region 70 is schematically indicated by a circular ring 71 in figure 4a. In this example embodiment, the arm 41 is a discrete and separate part that is pivotally attached to the housing 40 by means of for example a pivot axis located at the pivot point 52, and the spring element is provided in form of bent elastic deformable spring 72, such as flat sheet metal spring, as schematically illustrated in figures 8a and 8b.

Such a flat sheet metal spring 72, could for example include a first support region 73 configured for contacting a surface of the housing 40, and a second support region 74 configured for contacting a surface at the first end region 54 of the arm 41, wherein the flat sheet metal spring 72 is in a natural state in the inspection mode, as showed in figure 8a, and wherein the flat sheet metal spring 72 is in a tensioned state in the insertion mode, as showed in figure 8b, urging the arm 41 to move towards the inspection mode.

Alternatively, the spring element may have another shape, form and configuration, while still exerting a spring force urging the arm 41 to move towards the inspection mode. For example, the spring element may have the shape of a coil spring, a spiral spring, a torsion spring, or the like.

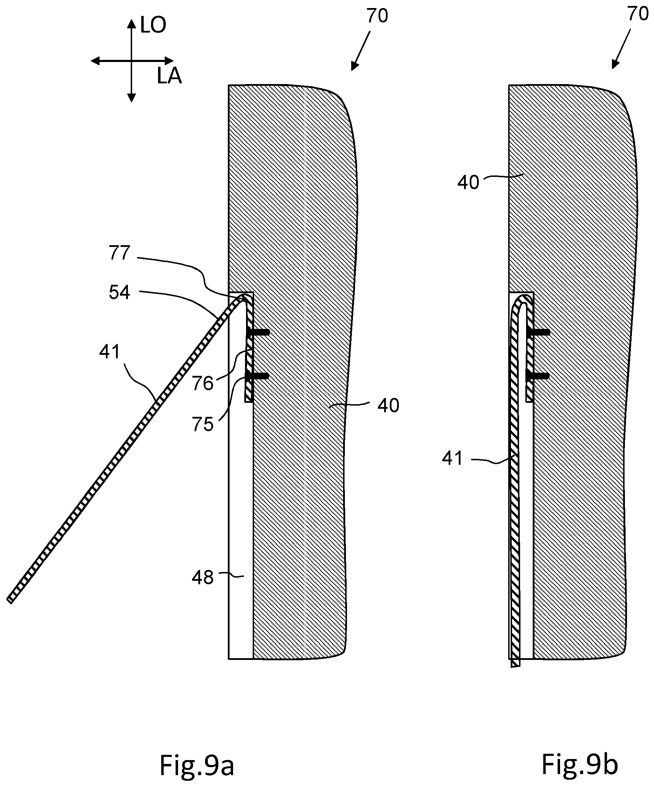

Figure 9a and 9b show region 70 of still a further example embodiment of the inspection camera 12. In this example embodiment, the arm 41 is a discrete and separate part that is itself made of an elastically deformable material, such as relatively thin spring steep. The arm 41 may for example include, at the first end region 54 of the arm 41, an arm attachment portion 76 that is configured to abut and be fastened to a surface of the housing 40, for example by means of threaded fasteners 75. The arm 41 may then include a bent portion 77 that forms a transition between the arm attachment portion 76 and the remaining part of the arm 41. The arm 41 is showed in its natural state in the inspection mode in figure 9a, and in the tensioned state in the insertion mode in figure 9b, in which the remaining part of the arm 41 is urged to move towards the inspection mode.

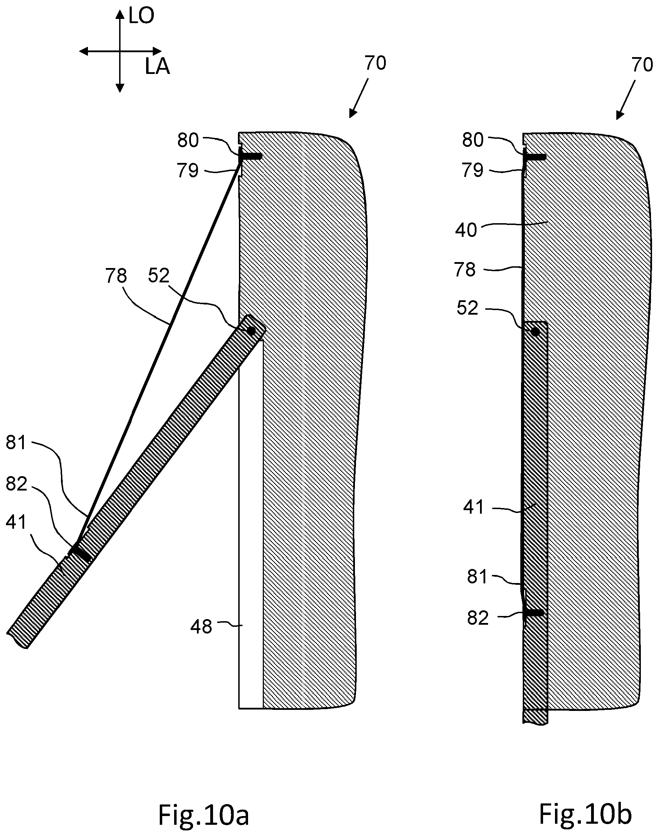

Figure 10a and 10b show region 70 of still a further example embodiment of the inspection camera 12. In this example embodiment, the arm 41 is a discrete and separate part that is pivotally attached to the housing 40 by means of for example a pivot axis located at the pivot point 52, and the spring element is made of an elastic cord 78 or the like that.

A first end 79 of the elastic cord 78 is attached to the housing 40, for example be a threaded fastener 80, at a location above the pivot point 52, i.e. closer to the first, upper, longitudinal end region 16 of the inspection camera 12 than the pivot point 52. Furthermore, a second end 81 of the elastic cord 78 is attached to the arm 41, for example be a threaded fastener 82.

The attachment locations of the elastic cord 78 and the length of the elastic cord 78 is selected, such that the elastic cord is elastically stretched when the arm 41 is located in the insertion mode, as illustrated in fig. 10b. Upon release of the arm 41 in the insertion mode the elastic cord 78 will exert a pulling force on the arm 41 that renders the arm 41 to pivot outwardly to a position in which the elastic cord is in a natural state, as illustrated in figure 10a and corresponding to the inspection mode. The spring element in this example embodiment is not limited to an elastic cord, but may alternatively be any type of tension spring, such as a coil spring. Moreover, the spring element may be made of metal or plastic material.

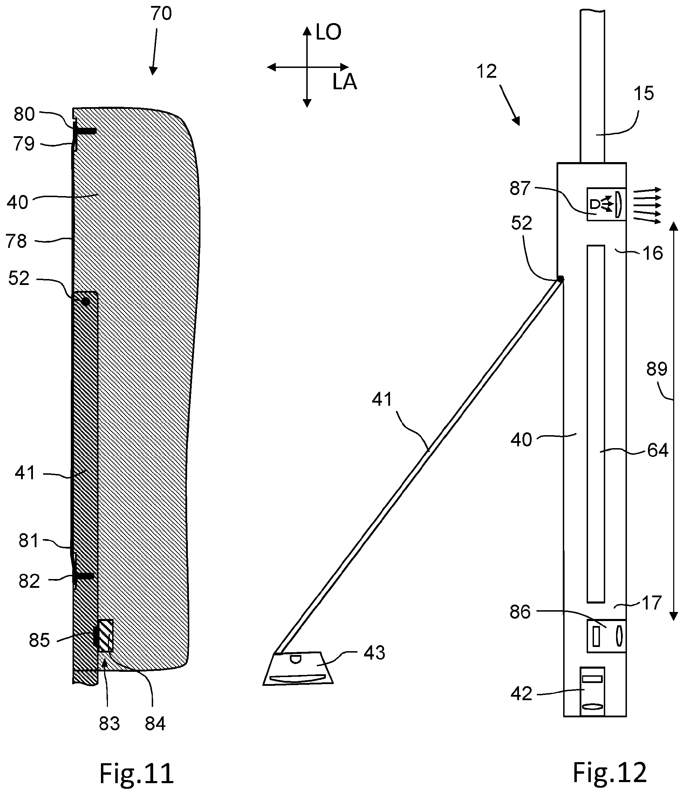

Figure 11 schematically shows a further example embodiment of the inspection camera 12, in which the housing 40 comprises a locking device 83 configured for temporary locking of the arm 41 in the insertion mode and remotely controlled release of the arm 41 from the insertion mode. This may be desirable if it is problematic to insert the inspection camera 12 into the inspection opening 121 due to the automatic motion of the arm to the unfolded state. Such problems may for example occur there is limited manual access to the inspection camera 12 by a user, or when the arm 41 does not smoothly slides through the inspection opening 121 due to interference with any portions therein. In such cases, it may be desirable to be able to lock the arm in the insertion mode until the inspection camera 12 has been inserted into the cargo tank 10, and first thereafter release the locking device 83 for enabling the arm 41 to unfold to the inspection mode. The locking device 83 is thus remotely controllable by the user.

The locking device 83 may for example include an electromagnet 84 located in the housing 40 and which may be controllably attracted to a magnetic member 85 fastened to the arm 41. Hence, as long as the electromagnet 84 is powered the magnetic member 85 is fastened to the electromagnet 84, against the force of the spring element that urges the arm 41 to the second position. Consequently, as soon as the electromagnet 84 is non-powered, the magnetic member 85 no longer is attracted to the electromagnet 84 and arm 41 moves to the second position. The locking device may alternatively be designed as some type of mechanical latch that enables remote controlled unlocking of the arm 41. The locking device 83 may of course alternatively be implemented in any of the other embodiments of the inspection camera 12 included in this disclosure.

Figure 12 schematically shows a further example embodiment of the inspection camera 12, in which the inspection camera 12 further comprises an additional image capturing device 86 directed towards a lateral side of the inspection camera 12, and an additional camera light 87 directed approximately in the same direction as the additional image capturing device 86. I other words, the inspection camera 12 may include two image capturing devices 42, 86 and two camera lights 43, 87.

The design, shape and functionality of the additional image capturing device 86 and additional camera light 87 may be substantially the same as those of the image capturing device 42 and camera light 43, which have been described more in detail with reference to figures 4a - 5b above. There are however two main differences, the orientation and the location of the additional devices 86, 87.

Since both the additional image capturing device 86 and additional camera light 87 are directed towards a lateral side of the inspection camera 12, these parts are configured for side-looking inspection of the interior 11 of the cargo tank 10. For example, the additional image capturing device 86 and additional camera light 87 are suitable for inspecting an interior surface 118 of a sidewall 114, 116 of the cargo tank, or a submerged cargo pump 20, or the like.

One of the additional image capturing device 86 and additional camera light 87 may for example be located in the first, upper, longitudinal end region 16 of the housing 40, and the other of the additional image capturing device 86 and additional camera light 87 may be located at the second, lower, longitudinal end region 17 of the housing 40. In the specific embodiment of figure 12, the additional camera light 87 is located in the first, upper, longitudinal end region 16 of the housing 40 and additional image capturing device 86 is located at the second, lower, longitudinal end region 17 of the housing 40.

The additional image capturing device 86 and additional camera light 87 may alternatively be located more close to each other, or even coincide, but it is generally desirable to have the additional image capturing device 86 and additional camera light 87 displaced from each other in the longitudinal direction, i.e. the direction perpendicular to a desired viewing direction, for the purpose of reducing the reflection caused by a foggy environment in the cargo tank 10, as described above with reference to figures 4a-5b.

Specifically, a longitudinal distance 89 between the additional camera light 87 and the additional image capturing device 86 may be in the range of 25 - 300 mm, specifically, 50 - 200 mm, and more specifically 75 - 125 mm. These dimensions are deemed resulting in significant reduction in light reflections from the camera light 43.

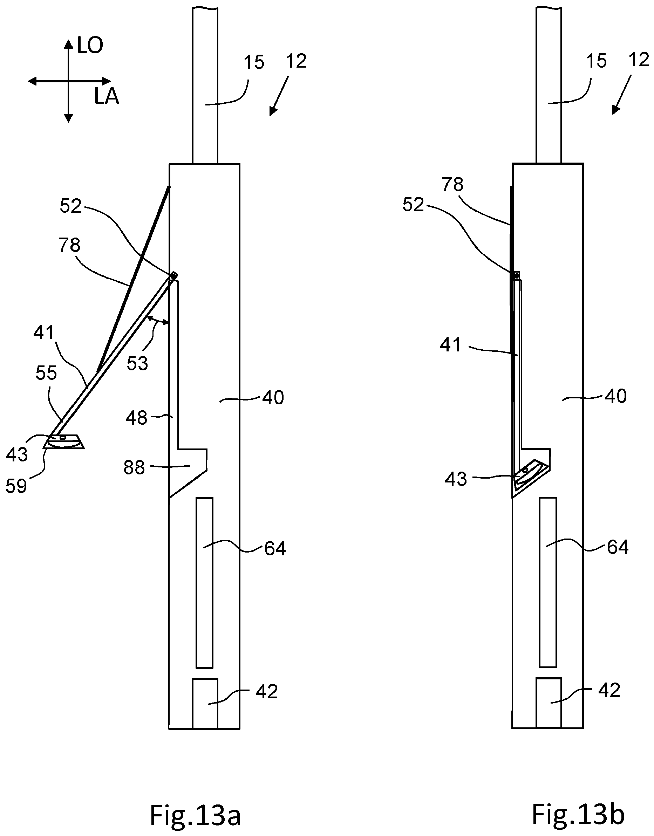

In the embodiments of at least figures 2-7 and 12, the arm 41 has been described as being relatively long and with the second end region 55 of the arm extending beyond the image capturing device 42 in the insertion mode. However, the arm 41 may have many alternative designs and configurations. For example, as schematically showed in figures 13a and 13b, which correspond the inspection camera in the inspection mode and insertion mode, respectively, the arm 41 may be significantly shorter and the recess 48 in the housing 40 may be enlarged in a region 88 for being able to completely accommodate for example the casing 59 of the camera light 43 in the insertion mode, as illustrated in figure 13b. In this specific embodiment, the length of the arm 41 may be in the range of 20 - 60%, specifically 30-50% of the total length 51 of the housing 40 in the longitudinal direction LO. Moreover, the pivot point 52 may for example be located in the upper half of the housing 40.

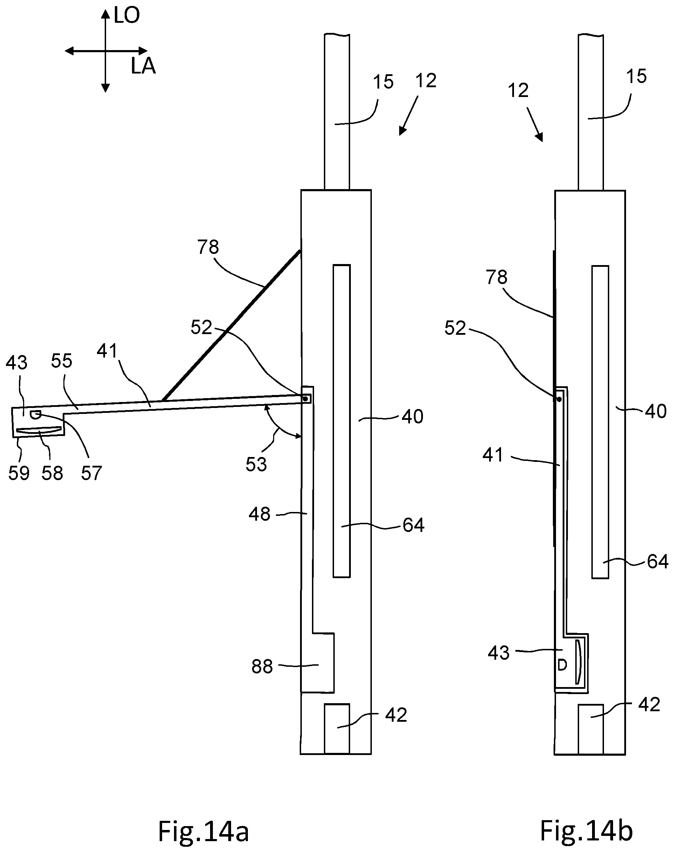

Furthermore, figures 14a and 14b, which correspond to still a further embodiment of the inspection camera in the inspection mode and insertion mode, respectively, show a relatively arm 41 design, similar to that of figures 13a-13b, but here with the camera light casing 59, the light source 57 and lens arrangement 58 being integrated in a body of the arm 41. A further, separate or combined, difference with respect to the embodiment of figures 13a - 13b is the larger angle 53 between a longitudinal direction of the arm 41 and the longitudinal direction LO of the housing 40 in the inspection mode, which angle is in the range of 70 - 90 degrees.

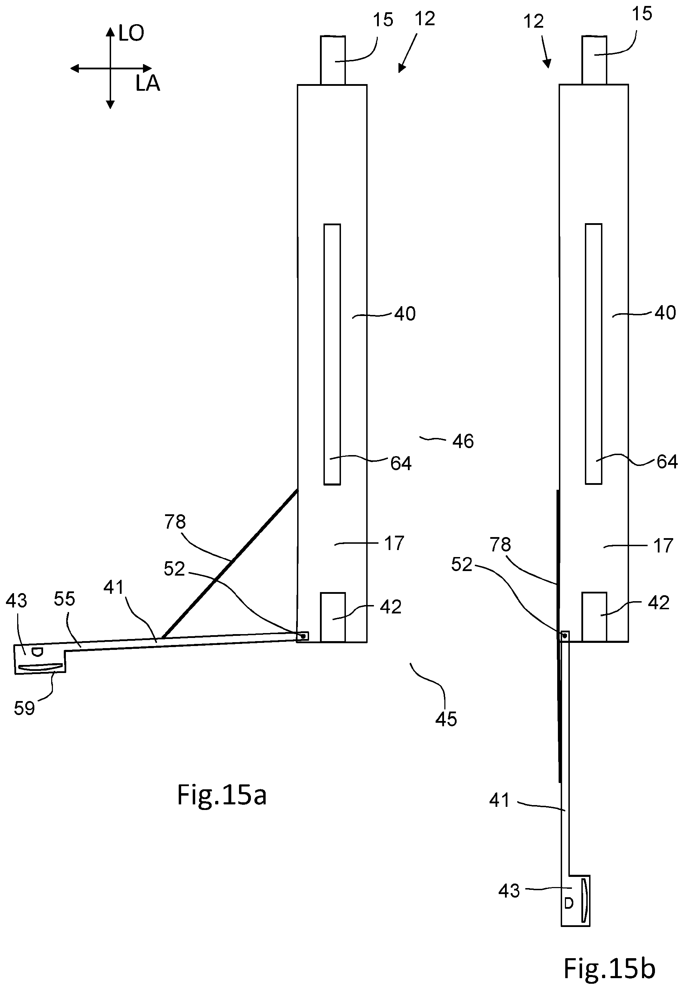

Figures 15a - 15b show still a further embodiment of the inspection camera 12 having a relatively short arm 41, but here the pivot point 52 is located in the second, lower, longitudinal end region 17 of the housing 41, specifically at a corner region connecting the second, lower, longitudinal end surface 45 of the housing 40 with the lateral side surface 46 of the housing 40. Thereby, there is essentially no need for any recess 48 in the housing 40 for accommodate arm 41 and camera light 43 because these are then located in front of, or at least lower than, the image capturing device in the insertion mode, as showed in figure 15b.

Although the invention has been disclosed primarily with reference to a pivotally mounted moveable arm 41, the moveable arm 41 may alternatively be arranged to perform a telescope-motion or a piston/cylinder-motion between the first position corresponding to an insertion mode and a second position corresponding to an inspection mode, wherein a telescope-motion or a piston/cylinder-motion may be generated by a threaded actuator or being fluid powered. In these arrangements, the moveable arm 41 may be configured to extend purely along a lateral direction.

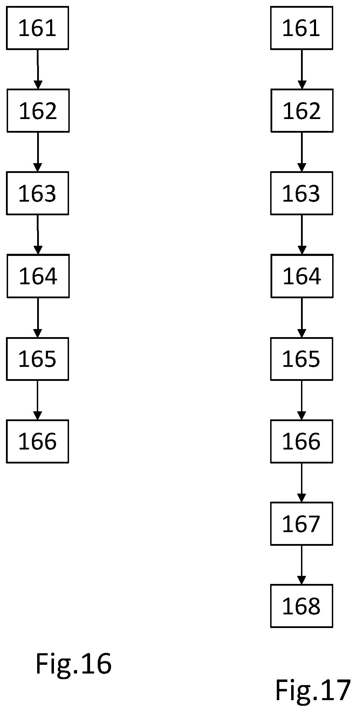

The disclosure also relates to a method for remote visual inspecting of an interior of a cargo tank 10 by means of an inspection camera 12. The method will be closed described below with reference to figure 16, wherein the method comprises a first step 161 of providing an inspection camera 12 having a housing 40 with an elongated shape extending along a longitudinal direction LO, a moveable arm 41 attached to the housing 40 and moveable between a first position corresponding to an insertion mode and a second position corresponding to an inspection mode, an image capturing device 42 oriented for capturing images in the longitudinal direction LO, and a camera light 43, wherein one of the image capturing device 42 and the camera light 43 is located on the housing 40 and the other of the image capturing device 42 and the camera light 43 is located on the arm 41. The method further comprises a second step 162 of ensuring that the arm 41 is in the insertion mode, a third step of inserting the inspection camera 12 through an inspection opening 121 located in an upper surface of the cargo tank 10, a fourth step 164 of shifting the arm 41 to the inspection mode, such that a lateral distance 50 between the camera light 43 and the image capturing device 42 is increased, and a fifth step 165 of lowering the inspection camera 12 to a desired inspection location by means of a cable 15 fastened to the inspection camera 12. Finally, the method comprises a sixth step 166 of capturing image data reflecting the interior of the cargo tank 10 by means of the image capturing device 43.

The fourth and fifths steps 164, 165 may optionally be reversed.

With reference to figure 17, the method may additionally include the following two steps, to be performed after the first to the sixth steps 161-166, a seventh step raising the inspection camera 12 by pulling the cable 15, and the eight step 168 of pulling the inspection camera 12 out through the inspection opening 121 of the cargo tank 10, wherein the arm 41 automatically shifts to the insertion mode upon sliding contact with a structure associated with the inspection opening 121.

The above description of the example embodiments of the present disclosure and the accompanying drawings are to be regarded as a non-limiting example of the disclosure and the scope of protection is defined by the appended claims. Any reference sign in the claims should not be construed as limiting the scope.

## Claims

1. Inspection camera (12) for remote visual inspection of an interior of a cargo tank (10), the inspection camera (12) comprising:
a housing (40) having an elongated shape extending along a longitudinal direction (LO),
a moveable arm (41) attached to the housing (40),
an image capturing device (42) oriented for capturing images in the longitudinal direction (LO),
and
a camera light (43),
wherein one of the image capturing device (42) and the camera light (43) is located on the housing (40) and the other of the image capturing device (42) and the camera light (43) is located on the arm (41), wherein the arm (41) is moveable in relation to the housing (40) between a first position corresponding to an insertion mode, which insertion mode refers to the arrangement of the arm (41) upon inserting the inspection camera (12) through an inspection opening (121), and a second position corresponding to an inspection mode, which inspection mode of the arm (41) refers to the arrangement of the arm (41) during capturing of images of the interior of the cargo tank (10) by means of the image capturing device (42), such that a lateral distance (50) between the camera light (43) and the image capturing device (42) is larger in the inspection mode than in the insertion mode, which lateral distance (50) refers to a distance in a lateral direction (LA), which is perpendicular to the longitudinal direction (LO) of the housing (40), wherein the arm (41) has an elongated shape extending substantially along the longitudinal direction (LO) in the insertion mode such that the arm (41) is within a cylindrical circumference of the housing (40) seen in the lateral direction (LA),
and wherein a central axis (47) extending through the housing (40) along the elongated direction of the housing and being substantially parallel with the longitudinal direction (LO) of the inspection camera (12).

2. Inspection camera according to claim 1, wherein the arm (41) is spring-loaded towards the second position.

3. Inspection camera according to claim 2, wherein the arm (41) is configured for automatic shift to the inspection mode upon release in the insertion mode.

4. Inspection camera according to any one of the preceding claims, wherein the arm (41) is configured to perform a pivotal motion when shifting between the insertion mode and the inspection mode.

5. Inspection camera according to any one of the preceding claims, wherein the arm (41) has an elongated shape with a first end region (54) and a second opposed end region (55), wherein the first end region (54) is pivotally fastened to the housing (40), and wherein the camera light (43) or image capturing device (42) is located at the second end region (55).

6. Inspection camera according to any one of the preceding claims, wherein the housing (40) comprises a first longitudinal end region (16) and a second longitudinal end region (17), wherein the camera light (43) or image capturing device (42) is located at the second longitudinal end region (17) of the housing (40).

7. Inspection camera according to any one of the preceding claims, wherein the housing (40) comprises a first longitudinal end region (16) and a second longitudinal end region (17), wherein the inspection camera (12) comprises a flexible rope-shaped structure (15), such as a cable (15), wire or rope, fastened to the first longitudinal end region (16) of the housing (40), preferably the inspection camera (12) comprises a cable (15) fastened to the first longitudinal end region (16) of the housing (40) and configured for transmitting image data acquired by the inspection camera (12) to a remote image data handling device (18).

8. Inspection camera according to any one of the preceding claims, wherein the housing (40) comprises a locking device (83) configured for temporary locking of the arm (41) in the insertion mode and remotely controlled release of the arm (41) from the insertion mode.

9. Inspection camera according to any one of the preceding claims, wherein the housing (40) has a recess (48) located in a lateral side surface (46), and wherein the arm (41), specifically the arm (41) together with the camera light (43) or image capturing device (42), is located in said recess (48) when the arm (41) is in the insertion mode.

10. Inspection camera according to any one of the preceding claims, wherein the housing (40) and arm (41) are configured for enabling automatic shift of the arm (41) to the insertion mode when the inspection camera (12) is pulled out through an inspection opening (121) of the cargo tank (10).

11. Inspection camera according to any one of the preceding claims, wherein the inspection camera (12), when having the arm (41) in the insertion mode, may be inserted through a circular inspection opening (121) having a diameter of 2.54 cm (1 inch).

12. Inspection camera according to any one of the preceding claims, wherein the lateral distance (50) between the camera light (43) and the image capturing device (42) is in the range of 25 - 300 mm, specifically, 50 - 200 mm, and more specifically 75 - 125 mm, in the inspection mode.

13. Inspection camera according to any one of the preceding claims, wherein the inspection camera (12) further comprises an additional image capturing device (86) directed towards a lateral side of the inspection camera (12), and an additional camera light (87) directed approximately in the same direction as the additional image capturing device (86).

14. Method for remote visual inspecting of an interior of a cargo tank (10) by means of an inspection camera (12), the method comprising:
providing an inspection camera (12) having a housing (40) with an elongated shape extending along a longitudinal direction (LO), a moveable arm (41) attached to the housing (40) and moveable in relation to the housing (40) between a first position corresponding to an insertion mode and a second position corresponding to an inspection mode, an image capturing device (42) oriented for capturing images in the longitudinal direction (LO), and a camera light (43), wherein one of the image capturing device (42) and the camera light (43) is located on the housing (40) and the other of the image capturing device (42) and the camera light (43) is located on the arm (41), wherein the arm (41) has an elongated shape extending substantially along the longitudinal direction (LO) in the insertion mode,
ensuring that the arm (41) is in the insertion mode,
inserting the inspection camera (12) through an inspection opening (121) located in an upper surface of the cargo tank (10),
shifting the arm (41) to the inspection mode, by moving the arm (41) in relation to the housing (40) such that a lateral distance (50) between the camera light (43) and the image capturing device (42) is increased, which lateral distance (50) refers to a distance in a lateral direction (LA), which is perpendicular to the longitudinal direction (LO) of the housing (40),
lowering the inspection camera (12) to a desired inspection location by means of a flexible rope-shaped structure (15), such as a cable (15), wire or rope, fastened to the inspection camera (12), and
capturing image data reflecting the interior of the cargo tank (10) by means of the image capturing device (42).

15. Method according to claim 14, the method further comprising:
raising the inspection camera (12) by pulling the flexible rope-shaped structure (15),
pulling the inspection camera (12) out through the inspection opening (121) of the cargo tank (10), wherein the arm (41) automatically shifts to the insertion mode upon sliding contact with a structure associated with the inspection opening (121).

## Patentansprüche

1. Inspektionskamera (12) zur visuellen Ferninspektion eines Innenraums eines Ladetanks (10), wobei die Inspektionskamera (12) umfasst:
ein Gehäuse (40), das eine längliche Form aufweist, das sich entlang einer Längsrichtung (LO) erstreckt,
einen beweglichen Arm (41), der am Gehäuse (40) befestigt ist,
eine Bildaufnahmevorrichtung (42), die zur Aufnahme von Bildern in Längsrichtung (LO) ausgerichtet ist, und
eine Kameraleuchte (43),
wobei sich eine von der Bildaufnahmevorrichtung (42) und der Kameraleuchte (43) am Gehäuse (40) befindet, und sich die andere von der Bildaufnahmevorrichtung (42) und der Kameraleuchte (43) am Arm (41) befindet, wobei der Arm (41) in Bezug zum Gehäuse (40) zwischen einer ersten Position, die einem Einführmodus entspricht, wobei der Einführmodus die Position des Arms (41) beim Einführen der Inspektionskamera (12) durch eine Inspektionsöffnung (121) bezeichnet, und einer zweiten Position, die einem Inspektionsmodus entspricht, wobei der Inspektionsmodus des Armes (41) als die Anordnung des Arms (41) während einer Aufnahme von Bildern des Innenraums des Ladetanks (10) mittels der Bildaufnahmevorrichtung (42) bezeichnet, beweglich ist, sodass ein seitlicher Abstand (50) zwischen der Kameraleuchte (43) und der Bildaufnahmevorrichtung (42) im Inspektionsmodus größer ist als im Einführmodus, wobei der seitliche Abstand (50) einen Abstand in seitlicher Richtung (LA) bezeichnet, die senkrecht zur Längsrichtung (LO) des Gehäuses (40) verläuft, wobei der Arm (41) eine längliche Form aufweist, die sich im Einführmodus im Wesentlichen in Längsrichtung (LO) erstreckt, sodass sich der Arm (41) in seitlicher Richtung (LA) betrachtet innerhalb eines zylindrischen Umfangs des Gehäuses (40) befindet,
und wobei sich eine Mittelachse (47) durch das Gehäuse (40) entlang der Längsrichtung des Gehäuses erstreckt und im Wesentlichen parallel zur Längsrichtung (LO) der Inspektionskamera (12) verläuft.

2. Inspektionskamera nach Anspruch 1, wobei der Arm (41) in Richtung der zweiten Position federbelastet ist.

3. Inspektionskamera nach Anspruch 2, wobei der Arm (41) beim Loslassen im Einführmodus zum automatischen Verschieben in den Inspektionsmodus konfiguriert ist.

4. Inspektionskamera nach einem der vorstehenden Ansprüche, wobei der Arm (41) konfiguriert ist, um beim Verschieben zwischen dem Einführmodus und dem Inspektionsmodus eine Schwenkbewegung auszuführen.

5. Inspektionskamera nach einem der vorstehenden Ansprüche, wobei der Arm (41) eine längliche Form mit einem ersten Endbereich (54) und einem zweiten gegenüberliegenden Endbereich (55) aufweist, wobei der erste Endbereich (54) schwenkbar am Gehäuse (40) befestigt ist und sich die Kameraleuchte (43) oder die Bildaufnahmevorrichtung (42) im zweiten Endbereich (55) befindet.

6. Inspektionskamera nach einem der vorstehenden Ansprüche, wobei das Gehäuse (40) einen ersten Längsendbereich (16) und einen zweiten Längsendbereich (17) umfasst, wobei sich die Kameraleuchte (43) oder die Bildaufnahmevorrichtung (42) im zweiten Längsendbereich (17) des Gehäuses (40) befindet.

7. Inspektionskamera nach einem der vorstehenden Ansprüche, wobei das Gehäuse (40) einen ersten Längsendbereich (16) und einen zweiten Längsendbereich (17) umfasst, wobei die Inspektionskamera (12) eine flexible, seilartige Struktur (15), wie beispielsweise ein Kabel (15), einen Draht oder ein Seil, umfasst, die am ersten Längsendbereich (16) des Gehäuses (40) befestigt ist, die Inspektionskamera (12) vorzugsweise ein Kabel (15) umfasst, das am ersten Längsendbereich (16) des Gehäuses (40) befestigt ist und zur Übertragung von Bilddaten, die von der Inspektionskamera (12) aufgenommen wurden, an eine entfernte Bilddatenhandhabungsvorrichtung (18) konfiguriert ist.

8. Inspektionskamera nach einem der vorstehenden Ansprüche, wobei das Gehäuse (40) eine Verriegelungsvorrichtung (83) umfasst, die zum vorübergehenden Verriegeln des Arms (41) im Einführmodus und zur ferngesteuerten Freigabe des Arms (41) aus dem Einführmodus konfiguriert ist.

9. Inspektionskamera nach einem der vorstehenden Ansprüche, wobei das Gehäuse (40) eine Aussparung (48) aufweist, die sich in einer seitlichen Seitenoberfläche (46) befindet, und wobei sich der Arm (41), insbesondere der Arm (41) zusammen mit der Kameraleuchte (43) oder der Bildaufnahmevorrichtung (42), in der Aussparung (48) befindet, wenn sich der Arm (41) im Einführmodus befindet.

10. Inspektionskamera nach einem der vorstehenden Ansprüche, wobei das Gehäuse (40) und der Arm (41) konfiguriert sind, um, wenn die Inspektionskamera (12) durch eine Inspektionsöffnung (121) des Ladetanks (10) herausgezogen wird, eins automatisches Verschieben des Arms (41) in den Einführmodus zu ermöglichen.

11. Inspektionskamera nach einem der vorstehenden Ansprüche, wobei die Inspektionskamera (12), wenn sie den Arm (41) im Einführmodus aufweist, durch eine kreisförmige Inspektionsöffnung (121), die einen Durchmesser von 2,54 cm (1 Zoll) aufweist, eingeführt werden kann.

12. Inspektionskamera nach einem der vorstehenden Ansprüche, wobei der seitliche Abstand (50) zwischen der Kameraleuchte (43) und der Bildaufnahmevorrichtung (42) im Inspektionsmodus im Bereich von 25 - 300 mm, insbesondere 50 - 200 mm und noch genauer 75 - 125 mm liegt.

13. Inspektionskamera nach einem der vorstehenden Ansprüche, wobei die Inspektionskamera (12) weiter eine zusätzliche Bildaufnahmevorrichtung (86) umfasst, die in Richtung einer seitlichen Seite der Inspektionskamera (12) gerichtet ist, und eine zusätzliche Kameraleuchte (87), die annähernd in die gleiche Richtung wie die zusätzliche Bildaufnahmevorrichtung (86) gerichtet ist.

14. Verfahren zur visuellen Ferninspektion eines Innenraums eines Ladetanks (10) mittels einer Inspektionskamera (12), wobei das Verfahren umfasst:
Bereitstellen einer Inspektionskamera (12), die ein Gehäuse (40) mit länglicher Form aufweist, das sich entlang einer Längsrichtung (LO) erstreckt, einen beweglichen Arm (41), der am Gehäuse (40) befestigt und in Bezug zum Gehäuse (40) zwischen einer ersten Position, die einem Einführmodus entspricht, und einer zweiten Position, die einem Inspektionsmodus entspricht, beweglich ist, eine Bildaufnahmevorrichtung (42) zur Aufnahme von Bildern in Längsrichtung (LO) ausgerichtet ist, und eine Kameraleuchte (43), wobei sich eine von der Bildaufnahmevorrichtung (42) und der Kameraleuchte (43) am Gehäuse (40) befindet, und sich die andere von der Bildaufnahmevorrichtung (42) und der Kameraleuchte (43) am Arm (41) befindet, wobei der Arm (41) im Einführmodus eine längliche Form aufweist, und sich im Wesentlichen in Längsrichtung (LO) erstreckt,
Dafür sorgen, dass sich der Arm (41) im Einführmodus befindet,
Einführen der Inspektionskamera (12) durch eine Inspektionsöffnung (121), die sich in einer oberen Oberfläche des Ladetanks (10) befindet,
Verschieben des Arms (41) in den Inspektionsmodus, durch Bewegen des Arms (41) in Bezug zum Gehäuse (40) sodass ein seitlicher Abstand (50) zwischen der Kameraleuchte (43) und der Bildaufnahmevorrichtung (42) vergrößert wird, wobei der seitliche Abstand (50) als Abstand in seitlicher Richtung (LA) bezeichnet wird, der senkrecht zur Längsrichtung (LO) des Gehäuses (40) verläuft,
Absenken der Inspektionskamera (12) zu einer gewünschten Inspektionsstelle, mittels einer flexiblen, seilförmigen Struktur (15), wie beispielsweise einem Kabel (15), Draht oder Seil, die an der Inspektionskamera (12) befestigt ist, und
Aufnehmen von Bilddaten, die das Innere des Ladetanks (10) widerspiegeln, mittels der Bildaufnahmevorrichtung (42).

15. Verfahren nach Anspruch 14, wobei das Verfahren weiter umfasst:
Anheben der Inspektionskamera (12) durch Ziehen an der flexiblen, seilförmigen Struktur (15),
Ziehen der Inspektionskamera (12) durch die Inspektionsöffnung (121) des Ladetanks (10) heraus, wobei der Arm (41) beim Gleitkontakt mit einer der Inspektionsöffnung (121) zugeordneten Struktur automatisch in den Einführmodus verschoben wird.

## Revendications

1. Caméra d'inspection (12) pour une inspection visuelle à distance de l'intérieur d'une citerne à cargaison (10), la caméra d'inspection (12) comprenant :
un boîtier (40) présentant une forme allongée s'étendant dans une direction longitudinale (LO),
un bras mobile (41) fixé au boîtier (40),
un dispositif de capture d'image (42) orienté pour capturer des images dans la direction longitudinale (LO), et
une lumière de caméra (43),
dans laquelle l'un du dispositif de capture d'image (42) et de la lumière de caméra (43) est situé sur le boîtier (40), et l'autre du dispositif de capture d'image (42) et de la lumière de caméra (43) est situé sur le bras (41), dans laquelle le bras (41) est mobile par rapport au boîtier (40) entre une première position correspondant à un mode d'insertion, lequel mode d'insertion fait référence à l'agencement du bras (41) lors de l'insertion de la caméra d'inspection (12) à travers une ouverture d'inspection (121), et une seconde position correspondant à un mode d'inspection, lequel mode d'inspection du bras (41) fait référence à l'agencement du bras (41) lors de la capture d'images de l'intérieur de la citerne à cargaison (10) par l'intermédiaire du dispositif de capture d'image (42) de telle sorte qu'une distance latérale (50) entre la lumière de caméra (43) et le dispositif de capture d'image (42) soit plus grande dans le mode d'inspection que dans le mode d'insertion, laquelle distance latérale (50) fait référence à une distance dans une direction latérale (LA), qui est perpendiculaire à la direction longitudinale (LO) du boîtier (40), dans laquelle le bras (41) présente une forme allongée s'étendant sensiblement le long de la direction longitudinale (LO) dans le mode d'insertion de telle sorte que le bras (41) se trouve à l'intérieur d'une circonférence cylindrique du boîtier (40) en regardant dans la direction latérale (LA),
et dans laquelle un axe central (47) s'étend à travers le boîtier (40) le long de la direction allongée du boîtier et est sensiblement parallèle à la direction longitudinale (LO) de la caméra d'inspection (12).

2. Caméra d'inspection selon la revendication 1, dans laquelle le bras (41) est chargé par ressort vers la seconde position.

3. Caméra d'inspection selon la revendication 2, dans laquelle le bras (41) est configuré pour passer automatiquement au mode d'inspection lors d'une libération dans le mode d'insertion.

4. Caméra d'inspection selon l'une quelconque des revendications précédentes, dans laquelle le bras (41) est configuré pour effectuer un mouvement de pivotement lors d'un passage entre le mode d'insertion et le mode d'inspection.

5. Caméra d'inspection selon l'une quelconque des revendications précédentes, dans laquelle le bras (41) présente une forme allongée avec une première région d'extrémité (54) et une seconde région d'extrémité opposée (55), dans laquelle la première région d'extrémité (54) est fixée de manière pivotante au boîtier (40), et dans laquelle la lumière de caméra (43) ou le dispositif de capture d'image (42) est situé(e) dans la seconde région d'extrémité (55).

6. Caméra d'inspection selon l'une quelconque des revendications précédentes, dans laquelle le boîtier (40) comprend une première région d'extrémité longitudinale (16) et une seconde région d'extrémité longitudinale (17), dans laquelle la lumière de caméra (43) ou le dispositif de capture d'image (42) est situé(e) dans la seconde région d'extrémité longitudinale (17) du boîtier (40).

7. Caméra d'inspection selon l'une quelconque des revendications précédentes, dans laquelle le boîtier (40) comprend une première région d'extrémité longitudinale (16) et une seconde région d'extrémité longitudinale (17), dans laquelle la caméra d'inspection (12) comprend une structure flexible en forme de corde (15), telle qu'un câble (15), un fil ou une corde, fixée à la première région d'extrémité longitudinale (16) du boîtier (40), de préférence la caméra d'inspection (12) comprend un câble (15) fixé à la première région d'extrémité longitudinale (16) du boîtier (40) et configuré pour transmettre des données d'image acquises par la caméra d'inspection (12) à un dispositif de traitement de données d'image distant (18).

8. Caméra d'inspection selon l'une quelconque des revendications précédentes, dans laquelle le boîtier (40) comprend un dispositif de verrouillage (83) configuré pour un verrouillage temporaire du bras (41) dans le mode d'insertion et une libération commandée à distance du bras (41) à partir du mode d'insertion.

9. Caméra d'inspection selon l'une quelconque des revendications précédentes, dans laquelle le boîtier (40) présente un évidement (48) situé dans une surface latérale (46), et dans laquelle le bras (41), en particulier le bras (41) avec la lumière de caméra (43) ou le dispositif de capture d'image (42), est situé dans ledit évidement (48) lorsque le bras (41) est dans le mode d'insertion.

10. Caméra d'inspection selon l'une quelconque des revendications précédentes, dans laquelle le boîtier (40) et le bras (41) sont configurés pour permettre un passage automatique du bras (41) dans le mode d'insertion lorsque la caméra d'inspection (12) est tirée à travers une ouverture d'inspection (121) de la citerne à cargaison (10).

11. Caméra d'inspection selon l'une quelconque des revendications précédentes, dans laquelle la caméra d'inspection (12), lorsque le bras (41) est dans le mode d'insertion, peut être insérée à travers une ouverture d'inspection circulaire (121) présentant un diamètre de 2,54 cm (1 pouce).

12. Caméra d'inspection selon l'une quelconque des revendications précédentes, dans laquelle la distance latérale (50) entre la lumière de caméra (43) et le dispositif de capture d'image (42) est dans la plage allant de 25 à 300 mm, spécifiquement de 50 à 200 mm, et plus spécifiquement de 75 à 125 mm, dans le mode d'inspection.

13. Caméra d'inspection selon l'une quelconque des revendications précédentes, dans laquelle la caméra d'inspection (12) comprend en outre un dispositif de capture d'image supplémentaire (86) dirigé vers un côté latéral de la caméra d'inspection (12), et une lumière de caméra supplémentaire (87) dirigée approximativement dans la même direction que le dispositif de capture d'image supplémentaire (86).

14. Procédé d'inspection visuelle à distance de l'intérieur d'une citerne à cargaison (10) par l'intermédiaire d'une caméra d'inspection (12), le procédé comprenant :
la fourniture d'une caméra d'inspection (12) présentant un boîtier (40) de forme allongée s'étendant dans une direction longitudinale (LO), un bras mobile (41) fixé au boîtier (40) et pouvant se déplacer par rapport au boîtier (40) entre une première position correspondant à un mode d'insertion et une seconde position correspondant à un mode d'inspection, un dispositif de capture d'image (42) orienté pour capturer des images dans la direction longitudinale (LO), et une lumière de caméra (43), dans lequel un certain du dispositif de capture d'image (42) et de la lumière de caméra (43) est situé sur le boîtier (40) et l'autre du dispositif de capture d'image (42) et de la lumière de caméra (43) est situé sur le bras (41), dans lequel le bras (41) présente une forme allongée s'étendant sensiblement dans la direction longitudinale (LO) dans le mode d'insertion.
l'assurance que le bras (41) est dans le mode d'insertion,
l'insertion de la caméra d'inspection (12) à travers une ouverture d'inspection (121) située dans une surface supérieure de la citerne à cargaison (10),
le passage du bras (41) dans le mode inspection, en déplaçant le bras (41) par rapport au boîtier (40) de sorte qu'une distance latérale (50) entre la lumière de caméra (43) et le dispositif de capture d'image (42) soit augmentée, laquelle distance latérale (50) fait référence à une distance dans une direction latérale (LA), qui est perpendiculaire à la direction longitudinale (LO) du boîtier (40),
l'abaissement de la caméra d'inspection (12) jusqu'à un emplacement d'inspection souhaité au moyen d'une structure flexible en forme de corde (15), telle qu'un câble (15), un fil ou une corde, fixée à la caméra d'inspection (12), et
la capture des données d'image reflétant l'intérieur de la citerne à cargaison (10) au moyen du dispositif de capture d'image (42).

15. Procédé selon la revendication 14, le procédé comprenant en outre :
le soulèvement de la caméra d'inspection (12) en tirant sur la structure flexible en forme de corde (15),
le tirage de la caméra d'inspection (12) vers l'extérieur à travers l'ouverture d'inspection (121) de la citerne à cargaison (10), dans lequel le bras (41) passe automatiquement dans le mode d'insertion lors d'un contact coulissant avec une structure associée à l'ouverture d'inspection (121).
